(19) Europäisches Patentamt
European Patent Office
Office européen des brevets

(11) EP 0 574 635 B1

(12) **EUROPEAN PATENT SPECIFICATION**

(45) Date of publication and mention
of the grant of the patent:
**16.09.1998 Bulletin 1998/38**

(51) Int Cl.⁶: **H04N 5/21**, H04N 5/94,
H04N 9/64

(21) Application number: **92401669.4**

(22) Date of filing: **16.06.1992**

(54) **Method and apparatus for dropout detection and compensation**

Verfahren und Gerät zur Erfassung und Kompensation von Signalausfällen

Méthode et appareil de détection et compensation de perte de signal

(84) Designated Contracting States:
**DE ES FR GB IT**

(43) Date of publication of application:
**22.12.1993 Bulletin 1993/51**

(73) Proprietor: **THOMSON multimedia
92648 Boulogne Cédex (FR)**

(72) Inventors:
• **Boie, Werner
F-67100 Strasbourg (FR)**
• **Watrin, Thierry
F-67200 Strasbourg (FR)**

(74) Representative:
**Hartnack, Wolfgang, Dipl.-Ing. et al
Deutsche Thomson-Brandt GmbH
Licensing & Intellectual Property,
Göttinger Chaussee 76
30453 Hannover (DE)**

(56) References cited:
**WO-A-92/06558          US-A- 4 977 461**

• **IEEE TRANSACTIONS ON CONSUMER
ELECTRONICS vol. 31, no. 3, August 1985, NEW
YORK US pages 226 - 239 TEICHNER 'QUALITY
IMPROVEMENT BY ADAPTIVE
INTER-/INTRAFRAME PROCESSING IN PAL TV
RECEIVERS'**

## Description

The present invention relates to a method and to an apparatus for dropout detection and compensation.

Background

The digitization of the analogue composite signal within the SECAM standard with 8 bits can pose serious problems for the chrominance signals as opposed to the digitization of NTSC or PAL signals. Due to the compatibility constraints given by the black and white TV sets in former times the amplitude of the FM subcarrier was chosen relatively small. This has led to an unfavourable signal-to-noise ratio for the chrominance signal compared with the other colour TV standards. This fact can give rise to unacceptable quantizing errors during the A/D conversion of the FM modulated chrominance signal, if the high frequency part of the composite signal has been subjected to a high degree of attenuation caused by mistuning effects in the receiver or not well adjusted frequency converter in the transmission chain, etc. In that case the reconstructed picture exhibits 'coloured fishes' (coloured FM spikes).

From US-A-4,977,461 a dropout detection circuit is known, which includes a delay circuit for causing a delay in playback signals reproduced from an optical recording medium.

A summation circuit sums the playback signals with the delayed output signals of the delay circuit, and a level detection circuit detects when the output signal level of the summation circuit exceeds a predetermined level. The output signal of the level detection circuit serves as a signal for detecting dropouts in the reproduced signals and is used as a control signal to control the operation of a switch. The switch normally passes demodulated playback signals to an output terminal. However, in case a dropout is detected in a given horizontal line, the control signal operates the switch so that it passes to the output terminal demodulated playback signals that have been delayed by one horizontal line period.

Invention

It is one object of the invention to disclose a method for dropout compensation of digitally sampled SECAM signals. This object is reached by the method disclosed in claim 1.

In fact, this problem is quite similar to the drop outs which occur on magnetic tapes. For that reason a technique like dropout compensation in VCR's can be used to suppress this distortion. But there are several properties of a drop out compensators used in VCR's which cannot be adopted for the chrominance processing of SECAM TV signals:

- The addition or replacement of the distorted FM signal by a FM signal belonging to another line can cause strong phase jumps at the input of the succeeding FM demodulator. This results in a FM demodulated signal after passing it through the deemphasis filter, which will take a long time to settle down to the correct level. This is regarded as unacceptable.
- The resulting hard decision will show a high noise sensitivity. This has to be avoided.
- A complete replacement of the distorted FM input signal must be possible.
- Certain tendencies to instability must be avoided.
- The processing in the mentioned drop out compensators is designed for normally large amplitudes of the FM modulated luminance signal and does not take into consideration any crosstalk effects.

Therefore the drop out compensation is made soft switch controlled at the output of the FM demodulator, whereby the input signal of the drop out detector is received from the input of the FM demodulator.

In principle this inventive method consists in dropout compensation of FM modulated video signals, whereby a dropout (DO) in a specific line (Ln) of a FM modulated component ($D'_R$, $D'_B$) is compensated using the respective component from a neighboured line (Ln-2), and said compensation (DOC) is made for FM demodulated components (DOCI), whereby said dropout (DO) is detected (DOD) from said FM modulated component (FMS) and the amount of said compensation (DOC) is soft switch controlled ($\alpha$) in accordance with a modulation amplitude (AMPL, AMPL) of said FM modulated component (FMS).

Advantageous additional embodiments of this inventive method are resulting from the respective dependent claims.

It is a further object of the invention to disclose a method for dropout detection of digitally sampled SECAM signals.

Advantageous additional embodiments of this inventive method are resulting from the respective dependent claims.

It is a further object of the invention to disclose an apparatus for dropout detection which utilizes the inventive method. This object is reached by the apparatus disclosed in claim 9.

It is a further object of the invention to disclose an apparatus for dropout detection and compensation which utilizes the inventive method. This object is reached by the apparatus disclosed in claim 10.

A further apparatus is described in claim 11.

Drawings

Preferred embodiments of the invention are described with reference to the accompanying drawings, which show in:

Fig. 1    part of a digital SECAM decoder used for the FM demodulation of the chrominance;

Fig. 2 block diagram of a known VCR drop out compensator;

Fig. 3 principle of VCR drop out compensation within one TV line;

Fig. 4 inventive SECAM drop out compensation;

Fig. 5 inventive drop out detector.

Preferred embodiments

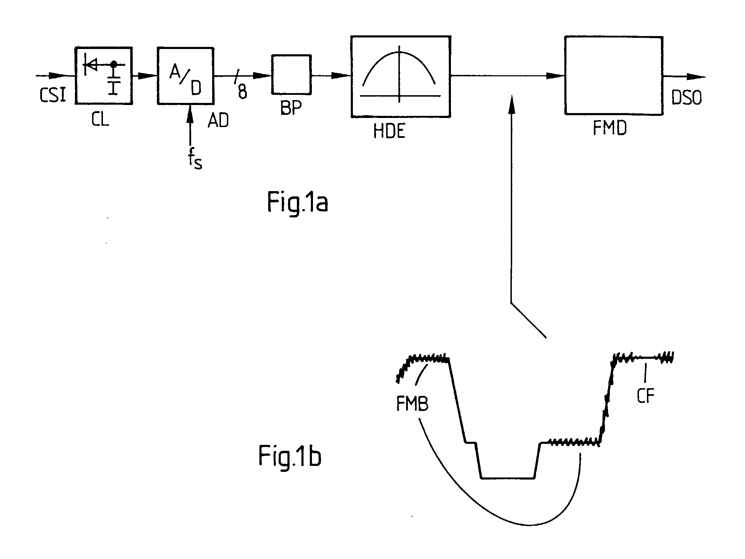

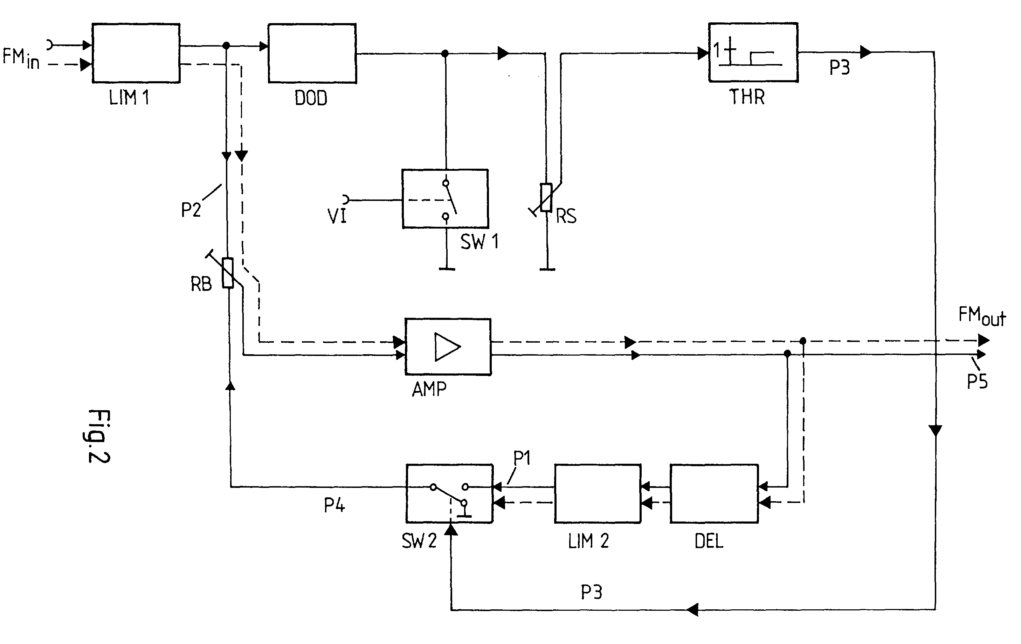

Fig. 1a shows an arrangement within a digital SECAM decoder which can lead to the kind of distortion mentioned above. A coded SECAM TV signal is fed via input CSI to a clamp circuit CL and then passed through an A/D converter AD with a sampling frequency $f_s$ and a bandpass BP to a HF-deemphasis circuit HDE.
At the output of circuit HDE a signal depicted in Fig. 1b is available. The FM burst FMB has a rather low amplitude. Where this burst is reduced due to e.g. transmission errors 'coloured fishes' CF will arise after demodulation in FM demodulator at output DSO.
To understand the different processing between the principal technique of a drop out compensator applied within a VCR and the algorithm proposed for a digital SECAM decoding Fig. 2 illustrates the block diagram of a conventional drop out compensator. The drop out compensator as shown in the Fig. 2 is located between the output of the VCR head amplifier and the input of the limiter prior to the FM demodulator. The principal behaviour can now be described as follows:
A FM modulated input signal FMin is passed through a first limiter LIM1 as signal P2 to a drop out detector DOD and to a first potentiometer RB. Without the occurrence of any drop outs the FM signal passes along the broken line in Fig. 2. The FM signal is weighted by the potentiometer RB and goes into an emitter follower AMP before it will go as signal FMout (P5) to the input of a further limiter (not illustrated in Fig. 2) prior to a FM demodulator and to the input of the feed back loop. The feed back loop starts with a line delay (DEL) of 64µs, is continued by a second limiter LIM2 and a gate SW2 which output is set by a control signal P3 to zero, if no drop out occurs. In case of the occurrence of drop outs greater than 25dB the drop out detector DOD generates an output signal different from zero which will be thresholded afterwards in a threshold circuit THR and used to close the feed back loop. The output signal of the drop out detector DOD is periodically connected to ground in a switch SW1 by vertical impulses VI. The threshold for signal P3 can be adjusted with a second potentiometer RS.
If the output signal P3 of circuit THR is 'high', the output signal P1 of second limiter LIM2 is connected via gate SW2 to the other input signal P4 of the first potentiometer RB. This potentiometer allows then to adjust a balance between the FM input signal P2 and the feedback signal P4.

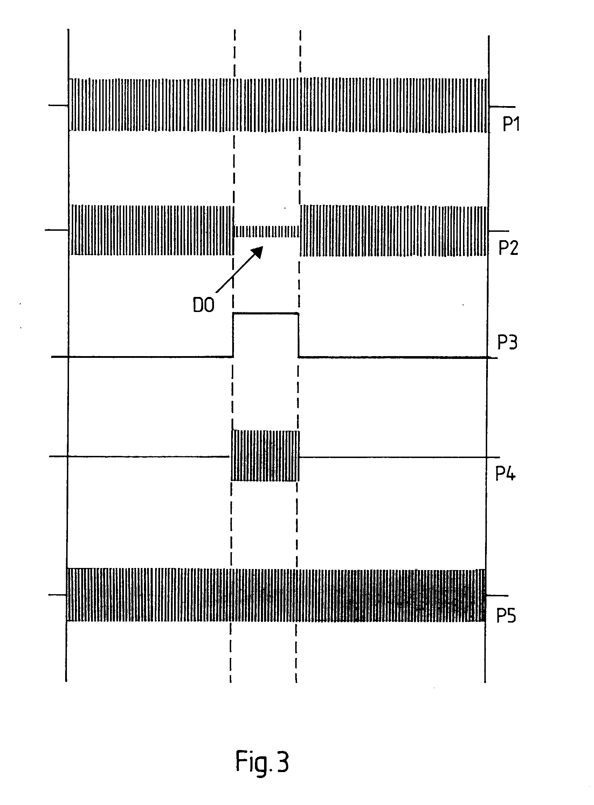

Fig. 3 illustrates the behaviour of this circuit for a drop out DO within one TV line. The signals P1 to P5 correspond to the respective signals in Fig. 2:

P1 - line n;
P2 - line n+1;
P3 - gate input;
P4 - feed back signal of line n;
P5 - reconstructed line n.

As mentioned above, several properties of such a drop out compensator used in VCR's cannot be adopted for the chrominance processing of digitally sampled SECAM signals:

- The hard decision by gate SW2 is highly noise sensitive.
- The potentiometer RB will not allow a complete replacement of the distorted FM input signal.
- The circuit in Fig. 2 exhibits a certain tendency to instability. Because of this the second limiter LIM2 is applied within the feed back loop.

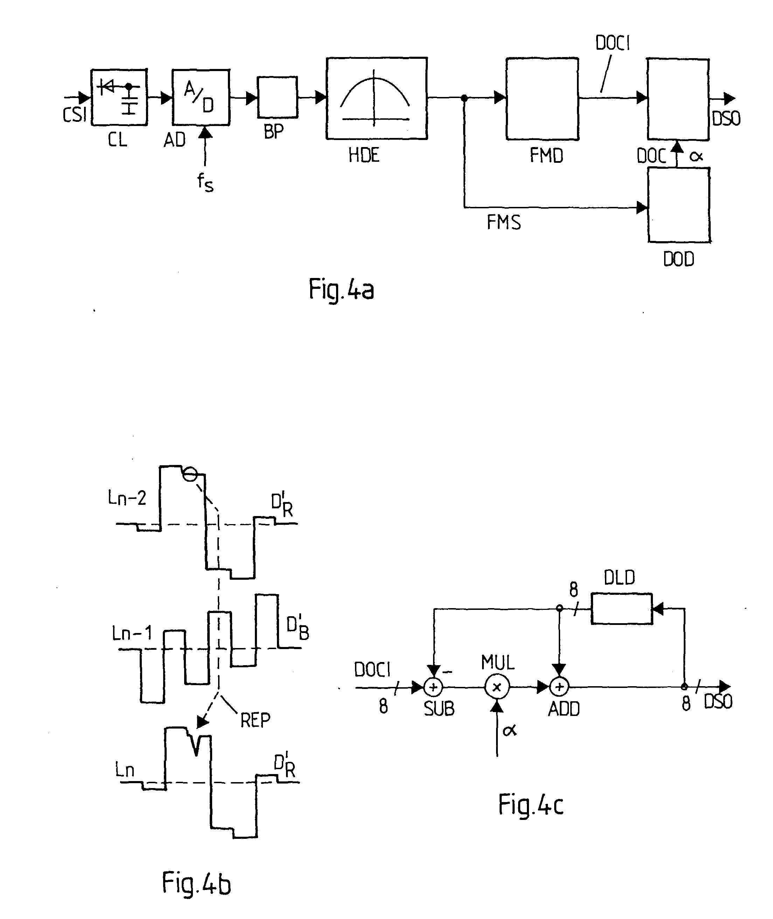

In order to overcome these difficulties in a SECAM dropout compensator, advantageously the processing illustrated in Fig. 4a is carried out. The input CSI, the output DSO and the circuits CL, AD, BP, HDE and FMD correspond to Fig. 1. The sampling frequency $f_s$ can be chosen to about four times the colour subcarrier frequency $f_{sc}$. Contrary to the realization in Fig. 2 the drop out compensation circuit DOC is located after the FM demodulator FMD, whereby the input signal FMS of the drop out detector DOD comes from the input signal of the FM detector.
Each time when a drop out is detected the current chrominance signal at the output of the FM demodulator will be replaced REP by the signal of the previous line of the same chrominance component as shown in Fig. 4b. Two lines Ln-2 and Ln with the $D_R'$ component and line Ln-1 with the $D_B'$ component are depicted.
In principle, the drop out compensator comprises a feed back loop with a 128µs delay DLD (because of the alternate-line scanned chrominance signals) and a soft switch between the input signal DOCI of the dropout compensator and the feed back signal as it is depicted in Fig. 4c. The soft switch can be arranged in the following way:
The output of delay DLD is subtracted from input signal DOCI in a subtractor SUB and added in an adder ADD to the output of a multiplier MUL, whereby the output of the adder is connected to the input of the delay and the output of the subtractor is connected to a first input of the multiplier and a control signal $\alpha$ is fed to the other multiplier input. The soft switch control signal $\alpha$ is generated by the drop out detector DOD in which the current amplitude at the input of the FM demodulator is measured and in which different thresholds can be selected depending on the current burst amplitude retrieved at the beginning of each line.
If no drop out is detected the control signal $\alpha$ becomes

'1' and the signal coming from the FM demodulator is passed through the compensator without manipulation. In case of a strong distortion in the FM signal the control signal $\alpha$ will be forced to zero and the complete previous line of the same chrominance component will be repeated. Advantageously this recursive structure is stable in any case, no oscillations can occur.

Normally, the double line delay DLD in the feed back loop necessitates the full bandwidth. This means conversely that the drop out compensator DOC will fail, if the output signal of the FM demodulator FMD is subjected to video deemphasis, lowpass filtering and sub-sampling (not illustrated in Fig. 4) prior to the drop out compensation. This is mainly due to the dispersal of the sharp impulses at the FM demodulator output after the lowpass filtering.

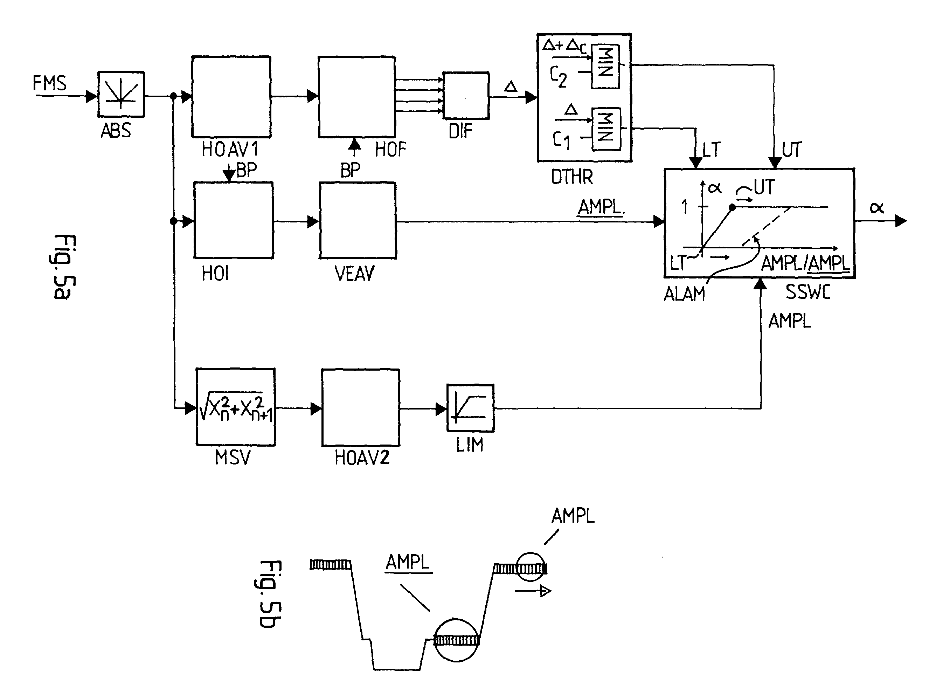

A more complex processing is carried out within the drop out detector DOD, depicted in Fig. 5a, which can be split into two parts:

- one in which the current amplitude of the FM signal is measured;
- another one in which the burst period within the horizontal blanking period is utilized to evaluate on one hand a mean value of the subcarrier amplitude for the rest frequencies and on the other hand the upper and lower threshold applied on the control signal $\alpha$.

For calculating the control signal $\alpha$ the input signal FMS is passed through an absolute value circuit ABS to a mean square value circuit MSV in which two succeeding samples are taken. This is quite correct, if one assumes a sinusoidal waveform of the FM subcarrier, sampled by a frequency of nearly four times the subcarrier frequency. For a better noise immunity the MSV output value for the current amplitude is averaged in a second horizontal average circuit HOAV2 over four samples which represents an integration almost over the subcarrier period. After passing a limiter LIM the signal AMPL is fed to a soft switch controller SSWC. Otherwise the evaluated amplitude AMPL is also dependent on reception or transmission conditions so that the amplitude AMPL can vary in a certain range without causing any impairments. For that reason a mean value of the subcarrier amplitude during the burst period is evaluated, gated by a back porch signal BP in a horizontal integration circuit HOI from the output of the absolute value circuit ABS and averaged over four TV lines in a vertical averager VEAV. The resulting signal $\underline{\text{AMPL}}$ is also fed to the soft switch controller SSWC.

Fig. 5b depicts where the signals AMPL and $\underline{\text{AMPL}}$ are located within a TV line. The ratio AMPL/$\underline{\text{AMPL}}$ between the current amplitude within the active line and the mean value measured during the blanking period determines in essential the control signal $\alpha$ before it is subjected to different thresholds. These thresholds have a significant influence on the behaviour of the drop out compensator DOD and are therefore realized in an adaptive way. In doing that, the rectified (in ABS) subcarrier signal FMS is averaged in a first horizontal average circuit HOAV1 over four samples, before a hold function of the maximum and minimum of that average value is applied in a hold function circuit HOF for the two subcarrier rest frequencies $f_{Dr}$ and $f_{Db}$, gated by the back porch signal BP. From these minimum and maximum values a difference $\Delta$ between the averaged MAX and MIN values of the hold function is calculated in a difference calculating circuit DIF:

$$\Delta = \text{MAX}(f_{Dr}) + \text{MAX}(f_{Db}) - \text{MIN}(f_{Dr}) - \text{MIN}(f_{Db}).$$

The difference $\Delta$ is compared in a double threshold circuit DTHR with different preselected values $C_1$, $C_2$ and $\Delta_c$. In case the variation of the subcarrier amplitude is small during the blanking period, $\Delta$ will also be small and the upper UT and lower LT threshold of the applied non-linearity have a minimum value. As the variation of the amplitude increases, both thresholds are shifted in soft switch controller SSWC to higher values AMPL/$\underline{\text{AM-PL}}$ according to the formulas:

lower threshold LT = Minimum $(\Delta,C_1)$, $C_1 = 0.375$;
upper threshold UT = Minimum $(\Delta+\Delta_c,C_2)$, $C_2 = 0.75$,

$$\Delta_C = 0.25 .$$

Herein the parameters $C_1$, $C_2$ and $\Delta_C$ represent empirical values which have proved to be suitable. If the amplitude $\underline{\text{AMPL}}$ falls below a certain threshold $\underline{\text{AM-PL}}_{min}$ the transfer characteristic ALAM of the non-linearity is advantageously kept constant.

The drop out compensation technique has proved to be quite effective in suppressing 'coloured fishes'. Even for sequences for which the subcarrier is already unvisible in case when the composite signal is observed on the screen, the digital SECAM decoder exhibits a significantly improved colour reproduction.

The invention can also be used to detect FM spikes after satellite transmission of SECAM signals and to compensate these distortions.
The invention can also be used in digital transcoders from SECAM to other TV standards like PAL or NTSC.

**Claims**

1. Method for dropout detection of FM modulated video signals, wherein a dropout (DO) occurs in a specific line (Ln) of a FM modulated component (D'$_R$; D'$_B$) **characterized in** that the current modulated amplitude (AMPL) of said FM modulated component is measured and mean amplitude values of said FM modulated component during burst periods within the horizontal blanking period of said FM modulated video signal are evaluated to derive therefrom, after averaging, an amplitude ($\underline{\text{AMPL}}$) of

rest frequencies within a horizontal blanking period of said FM video signal, and a soft switch control signal ($\alpha$) is generated in accordance with the ratio (AMPL/AMPL) between, said current amplitude and said amplitude of rest frequencies (AMPL, AMPL).

2. Method according to claim 1, wherein said soft switch control signal ($\alpha$) is used for controlling an amount of dropout compensation (DOC) of the FM demodulated video signal and wherein said dropout is compensated using the respective FM modulated component from a neighbouring line (Ln-2).

3. Method according to claim 1 and/or 2, **characterized in** that said FM video signal is sampled ($f_s$) with about four times the colour subcarrier frequency ($f_{sc}$).

4. Method according to any of claims 1 to 3, **characterized in** that mean square values MSV are determined from each two succeeding samples of said modulated FM signal, which has been rectified (ABS), and several - especially four - succeeding ones of said mean square values are averaged (HOAV2) for calculating said current modulated amplitude (AMPL).

5. Method according to any of claims 1 to 4, **characterized in** that said mean amplitude values (HOI) within each burst period of said FM video signal, which has been rectified (ABS), are taken and several - especially four - of said mean amplitude values of succeeding lines are averaged (VEAV) for calculating a current rest frequency amplitude (AMPL).

6. Method according to any of claims 1 to 5, **characterized in** that groups of several - especially four succeeding samples of said FM video signal, which has been rectified (ABS), are averaged (HOAV1), the maximum and the minimum values of said average are determined (HOF) during burst periods, and a differences between said maximum and minimum values is determined and compared to different preselected thresholds (DTHR) to derive upper and lower threshold values (LT, UT) for controlling the transfer characteristic of said soft switch control signal ($\alpha$).

7. Method according to any of claims 2 to 6, **characterized in** that the or a transfer characteristic for said soft switch control signal ($\alpha$) is kept constant, if said rest frequency amplitude (AMPL) drops below a pre-selected value ($AMPL_{min}$).

8. Method according to any of claims 1 to 7, **characterized in** that said FM video signals are satellite transmitted SECAM signals whose FM spikes are detected and compensated.

9. Dropout detection apparatus for implementing a method according to claim 1, comprising means (MSV, HOAV2, LIM) for measuring said current modulated amplitude (AMPL) of said FM modulated component, means (HOI, VEAV) for measuring said amplitude (AMPL) of rest frequencies defined in claim 1 and means (SSWC) for generating a soft switch control signal ($\alpha$) in accordance with the ratio (AMPL/AMPL) between said current amplitude and said amplitude of rest frequencies (AMPL, AMPL).

10. Apparatus according to claim 9, comprising a FM demodulator (FMD) for receiving said FM videosignal sampled ($f_s$) with about four times the colour subcarrier frequency ($f_{sc}$) having its output connected to a succeeding soft switch controlled ($\alpha$) dropout compensator (DOC) and comprising an absolute value circuit (ABS) to which the input signal of said FM demodulator, is fed and whose output is connected to:

a mean square value circuit (MSV) for generating a mean square value from each two succeeding samples, wherein four succeeding ones of said mean square value are averaged in a second horizontal average circuit (HOAV2), whose output is used for determining said current modulated amplitude (AMPL);
a horizontal integration circuit (HOI) in which a mean amplitude value of said FM modulated components during the burst period is evaluated, gated by a back porch signal (BP), and averaged over each four TV lines in a vertical averager (VEAV) to generate said amplitude of rest frequencies;
a first horizontal average circuit (HOAV1) for averaging each four samples, whose output is connected to a hold function circuit (HOI) in which, gated by a back porch signal (BP), maximum and minimum amplitude values of said FM modulated components are determined and formed to a common difference ($\Delta$) in a difference calculating circuit (DIF), wherein said common difference is compared in a double threshold circuit (DTHR) with different preselected values ($C_1$, $C_2$, $\Delta_C$) for calculating an upper threshold (UT) and a lower threshold (LT), which are used in a soft switch controller (SSWC) to shift the slope of a transfer characteristic of said soft switch control signal ($\alpha$) available at the output of said soft switch controller, and wherein said transfer characteristic is also a function of said ratio.

11. Apparatus according to claim 10 further comprising - connected in series - a clamp circuit (CL), an A/D converter (AD), a bandpass (BP), and an HF-deemphasis circuit (HDE).

**Patentansprüche**

1. Verfahren zur Dropout-Erfassung von FM-modulierten Videosignalen, wobei ein Dropout (DO) in einer bestimmten Zeile (Ln) einer FM-modulierten Komponente ($D'_R$, $D'_D$) auftritt, dadurch gekennzeichnet, daß
die laufende modulierte Amplitude (<u>AMPL</u>) der FM-modulierten Komponente gemessen wird und die mittleren Amplitudenwerte der FM-modulierten Komponente während der Farbsynchronsignalperioden innerhalb der Horizontalaustastzeit des FM-modulierten Videosignals ausgewertet werden, um daraus nach Mittelwertbildung eine Amplitude (AMPL) von Ruhefrequenzen innerhalb der Horzontalaustastzeit des FM-Videosignals abzuleiten, wobei ein Steuersignal (a) für einen weichen Schalter entsprechend dem Verhältnis (AMPL/<u>AMPL</u>) zwischen der laufenden Amplitude und der Amplitude der Ruhefrequenzen (AMPL, <u>AMPL</u>) erzeugt wird.

2. Verfahren nach Anspruch 1, worin das Steuersignal (a) für den weichen Schalter zur Steuerung eines Betrages einer Dropout-Kompensation (DOC) des FM-demodulierten Videosignals dient und das Dropout durch Verwendung der jeweiligen FM-modulierten Komponente aus einer benachbarten Zeile (Ln-2) kompensiert wird.

3. Verfahren nach Anspruch 1 und/oder 2, dadurch gekennzeichnet, daß das FM-Videosignal mit etwa dem Vierfachen der Farbunterträgerfrequenz ($f_{sc}$) getastet ($f_s$) wird.

4. Verfahren nach einem der Ansprüche 1 bis 3, dadurch gekennzeichnet, daß Quadratmittelwerte (MSV) jeweils aus zwei aufeinanderfolgenden Abtastwerten des modulierten FM-Signals bestimmt werden, das gleichgerichtet worden ist (ABS), und daß mehrere - insbesondere vier - aufeinanderfolgende Werte der Quadratmittelwerte gemittelt werden (HOAV2), um die laufende, modulierte Amplitude (AMPL) zu berechnen.

5. Verfahren nach einem der Ansprüche 1 bis 4, dadurch gekennzeichnet, daß die mittleren Amplitudenwerte (HOI) während jeder Farbsynchronsignaldauer des FM-Videosignals, das gleichgerichtet worden ist (ABS), genommen werden und mehrere - insbesondere vier - der mittleren Amplitudenwerte aufeinanderfolgender Zeilen gemittel werden (VEAV), um eine laufende Ruhefrequenz-Amplitude (<u>AMPL</u>) zu berechnen.

6. Verfahren nach einem der Ansprüche 1 bis 5, dadurch gekennzeichnet, daß Gruppen von mehreren - insbesondere vier - aufeinanderfolgenden Abtastwerten des FM-Videosignals, das gleichgerichtet worden ist (ABS), gemittelt werden (HOAV1), daß der Maximalwert und der Minimalwert der Mittelung während der Farbsynchronsignaldauer ermittelt werden (HOF) und eine Differenz (D) zwischen dem Maximalwert und dem Minimalwert bestimmt und mit verschiedenen vorgewählten Schwellwerten (DTHR) verglichen wird, um einen oberen und einen unteren Schwellwert (LT, UT) zu bilden, um dadurch die Übertragungskennlinie des Steuersignals (a) für den weichen Schalter zu steuern.

7. Verfahren nach einem der Ansprüche 2 bis 6, dadurch gekennzeichnet, daß die oder eine Übertragungskennlinie für das Steuersignal (a) für den weichen Schalter konstant gehalten wird, wenn die Ruhefrequenz-Amplitude (<u>AMPL</u>) unter einen vorgewählten Wert (<u>AMPL</u>$_{min}$) abfällt.

8. Verfahren nach einem der Ansprüche 1 bis 7, dadurch gekennzeichnet, daß die FM-Videosignale von einem Satelliten gesendete SECAM-Signale sind, deren FM-Spitzen ermittelt und kompensiert werden.

9. Vorrichtung zur Dropout-Erfassung zur Durchführung eines Verfahrens nach Anspruch 1, enthaltend Mittel (MSV, HOAV2, LIM) zum Messen der laufenden modulierten Amplitude (AMPL) der FM-modulierten Komponente, Mittel (HOI, VEAV) zum Messen der Amplitude (<u>AMPL</u>) der im Anspruch 1 genannten Ruhefrequenzen und Mittel (SSWC) zum Erzeugen eines Steuersignals (a) für einen weichen Schalter entsprechend dem Verhältnis (AMPL/<u>AMPL</u>) zwischen der laufenden Amplitude und der Amplitude der Ruhefrequenzen (AMPL, <u>AMPL</u>).

10. Vorrichtung nach Anspruch 9, enthaltend einen FM-Demodulator (FMD) zum Empfangen des FM-Videosignals, das mit ungefähr dem Vierfachen ($f_s$) der Farbunterträgerfrequenz ($f_{sc}$) getastet ist und dessen Ausgang mit einem darauffolgenden, durch einen weichen Schalter gesteuerten (a) Dropout-Kompensator (DOC) verbunden ist und eine Absolutwertschaltung (ABS) enthält, der das Eingangssignal des FM-Demodulators zugeführt ist und dessen Ausgang verbunden ist mit: einer Schaltung (MSV) für den Mittelwert der Quadratwerte zum Erzeugen eines mittleren Quadratwertes aus jeweils zwei aufeinanderfolgenden Abtastwerten, worin vier aufeinanderfolgende Werte der Mittelquadratwerte in einer zweiten Horizontal-Mittelungsschaltung (HOAV2) gemittelt werden, deren Ausgang zum Bestimmen der laufenden modulierten Amplitude (AMPL) dient,

einer Horizontal-Integrierschaltung (HOI), in der ein mittlerer Amplitudenwert der FM-modulierten Komponenten während der Dauer des Farbsynchronsignals ausgewertet, durch ein Signal (BP) für die hintere Schwarzschulter getastet und in einer Vertikal-Mittelungsschaltung (VEAV) jeweils über vier Femsehzeilen gemittelt wird, um die Amplitude der Ruhefrequenzen zu erzeugen,

einer ersten Horizontal-Mittelungsschaltung (HOAV1) zum Mitteln von jeweils vier Abtastwerten, deren Ausgang mit einer Halteschaltung (HOI) verbunden ist, in der, getastet durch ein Signal (BP) für die hintere Schwarzschulter, die Maximalamplitude und die Minimalamplitude der FM-modulierten Komponenten bestimmt werden und in einer Differenz-Berechnungsschaltung (DIF) in eine gemeinsame Differenz (D) geformt werden, wobei die gemeinsame Differenz in einer Schaltung (DTHR) mit zwei Schwellwerten mit verschiedenen vorgewählten Werten ($C_1$, $C_2$, $D_C$) verglichen werden, um einen oberen Schwellwert (UT) und einen unteren Schwellwert (LT) zu berechnen, die in einer Steuerschaltung (SSWC) für einen weichen Schalter dazu benutzt werden, die Steigung einer Übertragungskennlinie des Steuersignals (a) für den weichen Schalter zu verschieben, das an dem Ausgang der Steuerschaltung für den weichen Schalter verfügbar ist, und worin die Übertragungskennlinie außerdem eine Funktion des genannten Verhältnisses ist.

11. Vorrichtung nach Anspruch 10, ferner enthaltend - in Reihe geschaltet - eine Klemmschaltung (CL), einen A/D-Wandler (AD), einen Bandpaß (BP) und eine HF-Deemphasisschaltung (HDE).

**Revendications**

1. Méthode de détection des pertes de niveau des signaux vidéo modulés en FM où une perte de niveau (DO) se produit dans une ligne donnée (Ln) de la composante modulée en FM ($D'_R$, $D'_B$), **caractérisée** par le fait que l'amplitude modulée actuelle (AMPL) de ladite composante modulée en FM est mesurée et que les valeurs moyennes des amplitudes de ladite composante modulée en FM sont évaluées pendant les durées des salves au cours des périodes de suppression horizontales dudit signal vidéo modulé en FM, valeurs dont on dérive après moyennage une amplitude (<u>AMPL</u>) des fréquences de repos pendant la période de suppression horizontale dudit signal vidéo FM et qu'un signal de commande (α) d'un commutateur à action progressive est généré en fonction du rapport (AMPL/<u>AM-</u>

<u>PL</u>) entre ladite amplitude actuelle et ladite amplitude des fréquences de repos (AMPL, <u>AMPL</u>).

2. Méthode selon la revendication 1, où ledit signal de commande du commutateur à action progressive (α) est utilisé pour commander l'amplitude de la compensation de perte de niveau (DOC) du signal vidéo FM démodulé et où ladite perte de niveau est compensée à l'aide de la composante modulée FM correspondante provenant d'une ligne voisine (Ln-2).

3. Méthode selon les revendications 1 et/ou 2, **caractérisée** par le fait que ledit signal vidéo FM est échantillonné ($f_s$) à une fréquence égale à environ quatre fois la fréquence de la sous-porteuse couleur ($f_{sc}$).

4. Méthode selon l'une des revendications 1 à 3, **caractérisée** par le fait que la valeur efficace (MSV) est déterminée à partir de deux échantillons successifs dudit signal modulé en FM qui a été redressé (ABS) et que plusieurs valeurs successives - en particulier quatre - de la valeur efficace sont moyennées (HOAV2) pour le calcul de ladite amplitude modulée actuelle (AMPL).

5. Méthode selon l'une des revendications 1 à 4, **caractérisée** par le fait que lesdites valeurs de l'amplitude (HOI) pendant chacune des périodes de salve dudit signal vidéo FM redressé (ABS) sont échantillonnées et que plusieurs de ces valeurs - en particulier quatre - desdites valeurs moyennes de l'amplitude de lignes successives sont moyennées (VEAV) pour le calcul de l'amplitude actuelle des fréquences de repos (<u>AMPL</u>).

6. Méthode selon l'une des revendications 1 à 5, caractérisée par le fait que des groupes de plusieurs échantillons successifs - en particulier quatre - dudit signal vidéo FM redressé (ABS) sont moyennées (HOAV1), les valeurs minimum et maximum de ladite moyenne sont déterminées (HDF) pendant les périodes des salves et une différence (Δ) entre les valeurs minimum et maximum est calculée et comparée à différents seuils prédéfinis (DTHR), fournissant des valeurs des seuils inférieur et supérieur (LT, UT) qui commandent la caractéristique de transfert dudit signal de commande du commutateur à action progressive (α).

7. Méthode selon l'une des revendications 2 à 6, **caractérisée** par le fait que la caractéristique de transfert dudit signal de commande du commutateur à action progressive (α) ou l'une de ces caractéristiques de transfert est maintenue constante, si ladite amplitude des fréquences de repos (<u>AMPL</u>) descend au-dessous d'une valeur prédéfinie (<u>AMPL</u>

min).

8. Méthode selon l'une des revendications 1 à 7, **caractérisée** par le fait que ledit signal vidéo FM est un signal SECAM transmis par satellite dont les parasites FM sont détectés et compensés.

9. Dispositif de détection des pertes de niveau pour la mise en oeuvre de la méthode de la revendication 1, comportant des dispositifs (MSV, HOAV2, LIM) mesurant ladite amplitude modulée actuelle (AMPL) de ladite composante modulée en FM, des dispositifs (HOI, VEAV) mesurant ladite amplitude (AMPL) des fréquences de repos définie à la revendication 1 et un dispositif (SSWC) générant un signal de commande ($\alpha$) du commutateur à action progressive en fonction du rapport (AMPL/AMPL) entre ladite amplitude actuelle et ladite amplitude des fréquences de repos (AMPL, AMPL).

10. Dispositif selon la revendication 9, comportant un démodulateur FM (FMD) pour la réception dudit signal vidéo échantillonné à une fréquence ($f_s$) égale à environ quatre fois la fréquence de la sous-porteuse couleur (fsc), ayant sa sortie raccordée à un compensateur de pertes de niveau (DOC) à commutateur à action progressive commandé ($\alpha$) et comportant un circuit de calcul de la valeur absolue (ABS) auquel est appliqué le signal d'entrée dudit démodulateur FM et dont la sortie est raccordée :

     à un circuit de calcul de la valeur efficace (MSV) générant une valeur efficace à partir de deux échantillons successifs, où quatre échantillons successifs de ladite valeur efficace sont moyennés dans un second circuit de moyennage horizontal (HOAV2), dont la sortie est utilisée pour la détermination de ladite amplitude modulée actuelle (AMPL),

     à un circuit d'intégration horizontale (HOI) où la valeur moyenne de l'amplitude desdites composantes modulées en FM est évaluée pendant les périodes de salve, échantillonnée par un signal de palier arrière (BP) et moyennée sur quatre lignes TV verticales dans un moyenneur vertical (VEAV) pour générer ladite amplitude des fréquences de repos,

     à un premier circuit de moyennage horizontal (HOAV1) moyennant sur quatre échantillons, dont la sortie est raccordée à un circuit de blocage (HOI) où, échantillonné par un signal de palier arrière (BP) les valeurs maximale et minimale desdites composantes modulées en FM sont calculées et soustraites dans un circuit de calcul de la différence (DIF), ladite différence commune ($\Delta$) étant comparée dans un double circuit de seuil (DTHR) avec des valeurs prédéfinies (C1, C2, $\Delta_c$) en vue du calcul d'un seuil inférieur (LT) et d'un seuil supérieur (UT), qui sont utilisés dans le circuit de commande du commutateur à action progressive (SSWC) pour décaler la pente de la caractéristique de transfert dudit signal de commande du commutateur à action progressive ($\alpha$) disponible à la sortie dudit contrôleur du commutateur à action progressive, et où ladite caractéristique de transfert est également une fonction dudit rapport.

11. Dispositif selon la revendication 10 comportant en outre, raccordé en série, un circuit de verrouillage (CL), un convertisseur A/N (AD), un filtre passebande (BP) et un circuit de désaccentuation HF (HDE).

Fig.1a

Fig.1b

Fig.2

Fig. 3

Fig.4a

Fig.4b

Fig.4c

Fig. 5a

Fig. 5b